# EUROPÄISCHE PATENTSCHRIFT

(11) **EP 2 912 341 B1**
(45) Veröffentlichungstag und Bekanntmachung des Hinweises auf die Patenterteilung: **20.12.2017**
(21) Anmeldenummer: 13773213.7
(22) Anmeldetag: 30.09.2013
(51) Int. Cl.: F16F 15/131, F16F 15/14

(54) **TORSIONSSCHWINGUNGSDÄMPFER**
TORSIONAL VIBRATION DAMPER
AMORTISSEUR D'OSCILLATIONS DE TORSION

(30) Priorität: 29.10.2012 DE 102012219738
(43) Veröffentlichungstag der Anmeldung: 02.09.2015
(73) Patentinhaber: ZF Friedrichshafen AG, 88046 Friedrichshafen (DE)
(72) Erfinder: WIRACHOWSKI, Michael, 97078 Würzburg (DE); KRAM, Matthias, 97332 Volkach (DE); DONG, Ying, 97493 Bergrheinfeld (DE); STAMPF, Volker, 97422 Schweinfurt (DE); SUDAU, Jörg, 97464 Niederwerrn (DE); STÜRMER, Armin, 97517 Rannungen (DE); KOKOTT, Friedrich, 97493 Bergrheinfeld (DE); SASSE, Christoph, 97422 Schweinfurt (DE); PITTNER, Daniel, 97218 Gerbrunn (DE); ANDRES, Oliver, 96047 Bamberg (DE); VIERNEUSEL, Simone, 97486 Königsberg-Holzhausen (DE); EGLER, Dennis, 34314 Espenau (DE); SIEMENS, Kyrill, 97084 Würzburg (DE)
(86) Internationale Anmeldenummer: PCT/EP2013/070305
(87) Internationale Veröffentlichungsnummer: WO 2014/067727

(56) Entgegenhaltungen:
- DE-A1-102009 042 818
- DE-A1-102010 049 930

## Beschreibung

Die vorliegende Erfindung betrifft einen Torsionsschwingungsdämpfer, der einen Tilgermassenträger aufweist, an welchem zumindest eine relativ zu demselben bewegbar aufgenommene Tilgermasse aufgenommen ist, sowie wenigstens einen Anschlag. Je einer Anschlagseite der zumindest einen Tilgermasse ist jeweils wenigstens ein Anschlag zugeordnet, wobei die zumindest eine Tilgermasse sowie der Anschlag über eine Ausdehnung in Erstreckungsrichtung einer Zentralachse verfügen.

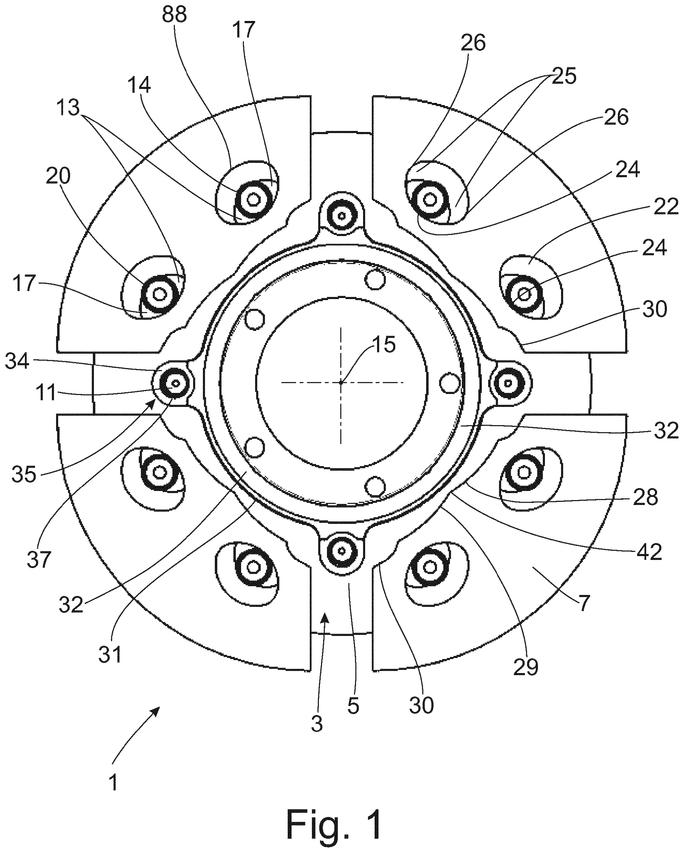

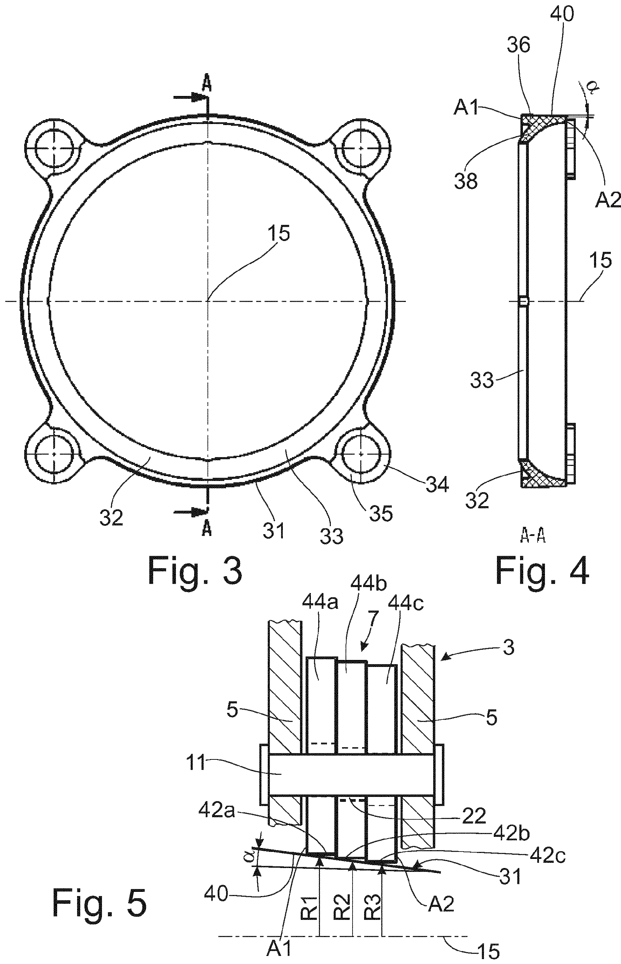

Ein derartiger Torsionsschwingungsdämpfer ist aus der DE 10 2009 042 818 A1 bekannt. Dieser Torsionsschwingungsdämpfer verfügt gemäß Fig. 1 im radial inneren Bereich über ein ringförmiges Bauteil, das an einer abtriebsseitigen Schwungmasse des Torsionsschwingungsdämpfers befestigt ist, und mit Spiel in Umfangsrichtung eine als Tilgermassenträger dienende Nabenscheibe aufnimmt. Die Nabenscheibe dient, wie Fig. 4 im Einzelnen erkennen lässt, zur Aufnahme einer Mehrzahl von in Umfangsrichtung aufeinander folgend angeordneten Tilgermassen, und verfügt hierzu für jede Tilgermasse über zwei Führungsbahnen, die jeweils über einen Rollkörper mit ebenfalls zwei Führungsbahnen der jeweiligen Tilgermasse verbunden sind. Auf diese Weise sind die Tilgermassen jeweils in Umfangsrichtung relativ zur Nabenscheibe verlagerbar, bis sie mit Radialerstreckungen an einem der jeweiligen Bewegungsrichtung zugeordneten elastischen Anschlag in Anlage gelangt sind. Gemäß der Ausführung nach Fig. 1 ist der elastische Anschlag an dem ringförmigen Bauteil vorgesehen.

Während die Tilgermassen im Fahrbetrieb hinreichend geräuscharm arbeiten, wird in Abstellphasen des jeweiligen Antriebs, wie einer Brennkraftmaschine, oder im Fahrzeug-Kriechbetrieb die an der Nabenscheibe wirksame Drehzahl und damit die auf die Tilgermassen einwirkende Fliehkraft rasch absinken. Sobald die Fliehkraft die Gewichtskraft unterschritten hat, fallen die Tilgermassen nach unten, und erzeugen hierbei in ihren Bahnen und/oder an den Anschlägen ein nicht tolerierbares Anschlaggeräusch.

Der Erfindung liegt die Aufgabe zugrunde, einen mit Tilgermassen versehenen Torsionsschwingungsdämpfer derart auszubilden, dass auch in Betriebsphasen , bei denen die auf die Tilgermassen wirksame Fliehkraft die Gewichtskraft unterschreitet, ein Anschlaggeräusch wirksam verhindert werden kann.

Gemäß dem wesentlichen Aspekt der vorliegenden Erfindung wird diese Aufgabe gelöst durch einen Torsionsschwingungsdämpfer mit einem Tilgermassenträger, an welchem zumindest eine relativ zu demselben bewegbar aufgenommene Tilgermasse aufgenommen ist, sowie mit wenigstens einem Anschlag, wobei je einer Anschlagseite der zumindest einen Tilgermasse jeweils wenigstens ein Anschlag zugeordnet ist, und wobei die zumindest eine Tilgermasse sowie der Anschlag über eine Ausdehnung in Erstreckungsrichtung einer Zentralachse verfügen.

Erfindungsgemäß ist dann weiter vorgesehen, dass die zumindest eine Tilgermasse in Richtung der Zentralachse eine Mehrzahl von Tilgermassenelementen aufweist, während der Anschlag an seiner den Anschlagseiten der Tilgermassenelemente zugewandten Seite über ein Anschlagprofil verfügt, das in Erstreckungsrichtung der Zentralachse für zumindest zwei Tilgermassenelemente unterschiedliche Radialabstände zwischen der jeweiligen Anschlagseite der Tilgermassenelemente und dem Anschlag bereitstellt.

Durch das am Anschlag vorgesehene Anschlagprofil wird erreicht, dass die Anschlagseiten der einzelnen Tilgermassenelemente in einem Betriebszustand, bei welchem die Fliehkraft die Gewichtskraft übersteigt, in unterschiedlichen Fallhöhen F1 bis F3 gegenüber dem Anschlagprofil angeordnet sind. Bei Eintritt eines Betriebszustandes, bei welchem die Fliehkraft die Gewichtskraft unterschreitet, wirken sich diese unterschiedliche Fallhöhen F1 bis F3 wie folgt aus:
Dasjenige Tilgermassenelement, dessen Anschlagseite die geringste Fallhöhe F1 zum Anschlagprofil aufweist, wird als erstes Tilgermassenelement am Anschlag zur Anlage kommen, während die weiteren Tilgermassenelemente nacheinander und damit zeitlich versetzt auf den Anschlag treffen. Da das einzelne Tilgermassenelement nur über ein Teilgewicht der gesamten Tilgermasse verfügt, wird das Auftreffen auf den Anschlag geräuschärmer erfolgen, als dies bei der gesamten Tilgermasse der Fall wäre. Da die einzelnen Tilgermassenelemente aufgrund der zuvor erläuterten Ausführung des Radialabstandes zeitlich aufeinander folgend am Anschlag auftreffen, wird sich auch keine Überlagerung des Geräuschs der einzelnen Tilgermassenelemente ergeben. Weiterhin kann durch Anpassung der geometrischen Ausbildung der Anschlagseiten der Tilgermassenelemente an die geometrische Ausbildung des Anschlagprofils des Anschlages ein Beitrag zur Reduzierung des Geräusches herbeigeführt werden.

Mit Vorzug ist das Anschlagprofil des Anschlages mit einem Gefälle in Erstreckungsrichtung der Zentralachse ausgebildet. Hierdurch ergibt sich die Situation, dass das Anschlagprofil des Anschlages an einer ersten Axialseite A1 der Tilgermasse einen Radialabstand gegenüber der Zentralachse aufweist, um an einer zweiten Axialseite A2 der Tilgermasse seine maximale Ausdehnung anzunehmen. Axial zwischen den beiden Axialseiten A1 und A2 stellt sich demnach ein Radialabstand gegenüber der Zentralachse ein, der größer als der Radialabstand an der Axialseite A1, aber kleiner als der Radialabstand an der Axialseite A2 ist. Das besagte Gefälle kann einem zumindest im Wesentlichen kontinuierlichen Verlauf folgen, wobei sich das Anschlagprofil mit besonderem Vorzug in dieser Richtung zumindest im Wesentlichen keilförmig verjüngt, es kann aber auch einem zumindest im Wesentlichen diskontinuierlichen Verlauf folgen, indem es in dieser Richtung stufenförmig verläuft.

Vorzugsweise sind die Anschläge für die Tilgermassen in Umfangsrichtung zwischen je zwei Tilgermassen befestigt. Hierzu verfügen die Anschläge über Anschlagaufnehmer. Diese Anschlagaufnehmer können in einem ersten Fall an einer Befestigungsstelle, beispielsweise an einem Tilgermassenträger aufgenommen und zumindest im Wesentlichen stiftförmig ausgebildet sein, sie können in einem zweiten Fall aber auch durch Zapfen gebildet sein, die am Anschlag befestigt sind, und in entsprechende Aufnahmen der Befestigungsstelle, beispielsweise am Tilgermassenträger, eingreifen. Im erstgenannten Fall kann die Befestigungsstelle, beispielsweise der Tilgermassenträger, mit zwei zueinander parallel verlaufenden Tilgermassen-Trägerelementen ausgebildet sein, die durch Abstandsstücke auf fester Distanz zueinander gehalten sind, wobei die Abstandsstücke jeweils eine Halterung am Anschlag durchgreifen. Im zweitgenannten Fall ist dagegen die jeweilige Halterung am Anschlag zur Aufnahme des Zapfens versehen, der zum Eingriff in eine Aufnahme an der Befestigungsstelle bestimmt ist.

Alternativ können die Anschlagaufnehmer allerdings auch durch Haltevorsprünge gebildet sein, die jeweils eine zugeordnete Ausnehmung durchgreifen oder in diese eingreifen, um den Anschlag auf diese Weise an einer Befestigungsstelle anzuklipsen. Als Befestigungsstelle sind Bauteile einer Kopplungsanordnung, wie beispielsweise ein Element einer Dämpfungseinrichtung oder eines hydrodynamischen Kreises vorteilhaft.

Wiederum alternativ können die Anschläge gegenüber den Anschlagaufnehmern schwimmend aufgenommen und damit relativ zu den Anschlagaufnehmern bewegbar sein. Bei schwimmender Aufnahme der Anschläge können diese insbesondere dann, wenn sie an einem ringförmigen Bauteil vorgesehen sind, über eine gesteigerte Nachgiebigkeit und damit über verbesserte Dämpfungseigenschaften verfügen. Dies kann sich vorteilhaft auswirken, wenn die Tilgermassenelemente mit ihren Anschlagseiten in Anlage gelangen.

Die Anschläge können sich, in Ergänzung der Anschlagaufnehmer, an einem Bauteil der Kopplungsanordnung, wie beispielsweise an einem Element des hydrodynamischen Kreises, radial abstützen.

Wenn die Abstandsstücke die jeweilige Halterung am Anschlag durchgreifen, kann dies mit einem Achsversatz zwischen der Achse des jeweiligen Abstandsstückes und der Achse der jeweiligen Halterung erfolgen. Durch diesen Achsversatz entsteht zwischen der Halterung und dem jeweiligen Abstandsstück ein Freiraum, der eine Elastizität am Anschlag begünstigt, indem die durch eine Tilgermasse beaufschlagte Wandung der Halterung sich elastisch in diesen Freiraum hinein erstrecken kann. Interessant ist eine solche Lösung, wenn die Radialanschläge für eine Mehrzahl an Tilgermassen auf einem gemeinsamen, vorzugsweise ringförmigen Bauteil zusammengefasst sind, das sich radial innerhalb der Tilgermassen erstreckt, und wenn der Achsversatz derart angelegt ist, dass die jeweiligen Freiräume in den radial äußeren Bereichen der Halterungen entstehen. Das ringförmige Bauteil ist dann über die radial inneren Bereiche der Halterungen zentriert.

Die Erfindung wird nachfolgend anhand der beiliegenden Figuren detailliert beschrieben. Es zeigt:
Fig. 1 eine Draufsicht auf einen Torsionsschwingungsdämpfer mit Tilgermassen und zugeordnetem Anschlag, wobei die Tilgermassen eine Position einnehmen, die bei die Schwerkraft übersteigender Fliehkraft, aber ohne eingeleitete Torsionsschwingung, erreicht ist;
Fig. 2 wie Fig. 1, aber mit den Tilgermassen in einer Position, die bei unter die Schwerkraft abgesenkter Fliehkraft eingenommen wird;
Fig. 3 den in Fig. 1 oder 2 eingezeichneten Anschlag in separierter Darstellung;
Fig. 4 den Anschlag gemäß der Schnittlinie A - A in Fig. 3;
Fig. 5 eine stark vergrößerte Herauszeichnung des in Fig. 4 gezeigten Anschlagprofils für eine Mehrzahl von Tilgermassenelementen einer Tilgermasse;
Fig. 6 eine Herauszeichnung einer der in Fig. 3 erkennbaren Halterungen des Anschlags, mit Radialversatz zwischen der Halterung und einem von derselben umschlossenen Anschlagaufnehmers;
Fig. 7 den Anschlag gemäß Fig. 3 in räumlicher Darstellung mit Halterungen zum Durchgang von Anschlagaufnehmern;
Fig. 8 wie Fig. 7, aber mit Halterungen, an welchen Anschlagaufnehmer befestigt sind;
Fig. 9 eine Darstellung des Torsionsschwingungsdämpfers in einer hydrodynamischen Kopplungsanordnung;
Fig. 10 eine Herauszeichnung einer Dämpfungseinrichtung sowie des Torsionsschwingungsdämpfers aus der in Fig. 9 gezeigten Kopplungsanordnung;
Fig. 11 ein Anschlag mit anderen Anschlagaufnehmern als in den vorangehenden Figuren und mit Radialabstützung des Anschlags an einem Bauteil der Kopplungsanordnung;
Fig. 12 ein Anschlag mit nochmals anderen Anschlagaufnehmern als in Fig. 11 und ohne Radialabstützung des Anschlags an einem Bauteil der Kopplungsanordnung;
Fig. 13 wie Fig. 12, aber mit Radialabstützung des Anschlags an einem Bauteil der Kopplungsanordnung;
Fig. 14 wie Fig. 1, aber mit Führungsbahnen in den Tilgermassen und im Tilgermassenträger entsprechend dem Stand der Technik für Rollkörper;
Fig. 15 wie Fig. 14, aber mit Führungsbahnen in den Tilgermassen und im Tilgermassenträger, die sich von denjenigen nach Fig. 14 unterscheiden;
Fig. 16 eine Schnittdarstellung zu einer Ausführung des Torsionsschwingungsdämpfers mit Anschlägen ohne formschlüssige Verbindung zu Anschlagaufnehmern;
Fig. 17 eine Draufsicht aus der Richtung XVII - XVII in Fig. 16;
Fig. 18 wie Fig. 16, aber mit anderer Ausbildung der Anschlagaufnehmer ;
Fig. 19 eine Draufsicht aus der Richtung XIX - XIX in Fig. 18;
Fig. 20 wie Fig. 16, mit nochmals anderer Ausbildung der Anschlagaufnehmer;
Fig. 21 eine Herauszeichnung eines ringförmigen Bauteils mit Anschlägen;
Fig. 22 wie Fig. 16, aber mit anderer Positionierung der Anschläge;
Fig. 23 eine Draufsicht aus der Richtung XXIII - XXIII in Fig. 22.

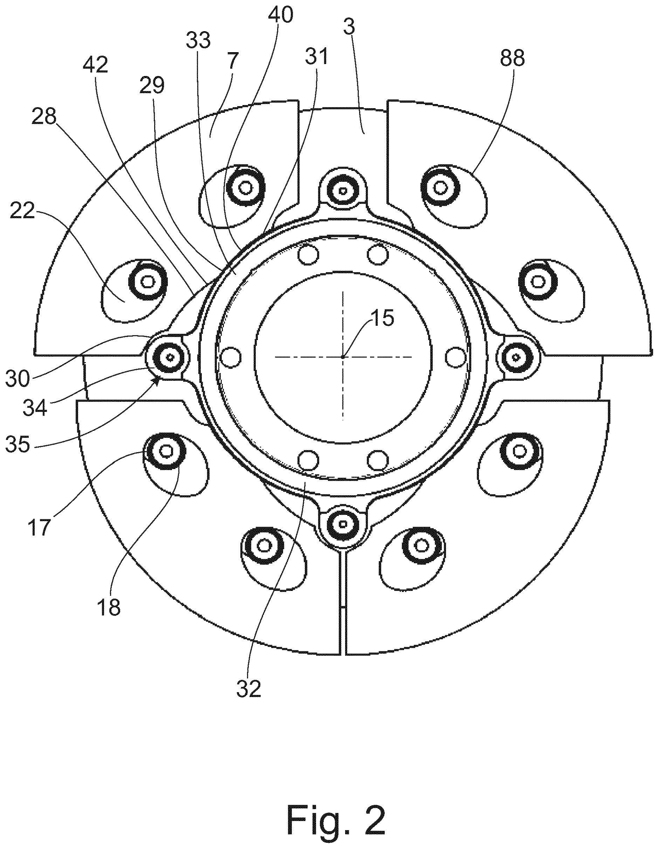

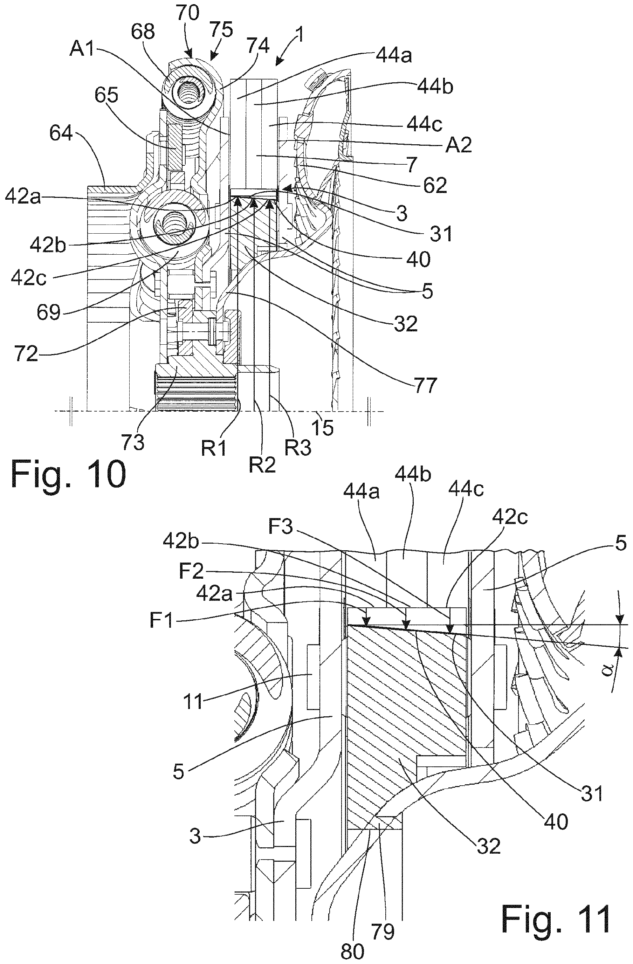

In Fig. 1 ist ein Torsionsschwingungsdämpfer 1 mit einem Tilgermassenträger 3 dargestellt, der zwei mit Axialabstand angeordnete Tilgermassen-Trägerelemente 5 aufweist, von denen zur besseren Darstellbarkeit einer Mehrzahl von am Tilgermassenträger 3 aufgenommenen Tilgermassen 7 lediglich das axial hinter den Tilgermassen 7 angeordnete Tilgermassen-Trägerelement 5 eingezeichnet ist. Die beiden Tilgermassen-Trägerelemente 5 sind durch Abstandsstücke 11 miteinander verbunden. Beide Tilgermassen-Trägerelemente 5 sowie eines der Abstandsstücke 11 sind in Fig. 5 oder 10 erkennbar, die darüber hinaus auch Informationen zur Tilgermasse 7 vermittelt. Demnach weist die Tilgermasse 7 in Achsrichtung eine Mehrzahl von Tilgermassenelementen 44a bis 44c auf, die über Rollkörper 20 innerhalb von Führungsbahnen 22 (vgl. Fig. 2) angeordnet sind, und zwar derart, dass die Führungsbahnen 22 eine radiale Relativbewegung der Tilgermassenelemente 44a bis 44c gegenüber den Abstandsstücken 11 ermöglichen. Die Tilgermassenelemente 44a bis 44c weisen an ihren radialen Innenseiten noch näher zu erläuternde Anschlagseiten 42a, 42b, 42c auf.

An den Tilgermassen-Trägerelementen 5 sind, jeweils paarweise, Führungsbahnen 13 vorgesehen, die über einen gekrümmten Verlauf verfügen, mit je einem Ausgangsbereich 14, in welchem die jeweilige Führungsbahn 13 den größten Radialabstand von einer Zentralachse 15 aufweist, und mit Anschlussbereichen 17, die sich, einander umfangsmäßig entgegengesetzt erstreckend, an beide Seiten des Ausgangsbereiches 14 anschließen. In Fig. 2 ist ein Umfangsende 18 einer der beiden Anschlussbereiche 17 erkennbar. Selbstverständlich verfügt der andere Anschlussbereich 17 ebenfalls über ein solches Umfangsende, was allerdings in der Zeichnung nicht dargestellt ist.

In den Führungsbahnen 13 ist jeweils ein Rollkörper 20 angeordnet, der jeweils in eine zugeordnete Führungsbahn 22 der Tilgermassen 7 eingreift, wobei die Führungsbahnen 22 jeweils paarweise in den Tilgermassen 7 angeordnet sind. In der Darstellung gemäß Fig. 1 streben die Tilgermassen 7, bedingt durch die Fliehkraft, nach radial außen, so dass sich die Rollkörper 20 jeweils im Ausgangsbereich 24 der jeweiligen Führungsbahn 22 positionieren, also in demjenigen Bereich, der über den geringsten Radialabstand zur Zentralachse 15 verfügt. Angrenzend an den Ausgangsbereich 24 folgen, sich einander umfangsmäßig entgegengesetzt erstreckend, Anschlussbereiche 25, die in Umfangsrichtung durch jeweils ein Umfangsende 26 begrenzt sind.

Die Tilgermassen 7 weisen jeweils an ihren radial inneren Enden jeweils eine geometrische Anformung 28 auf, die im umfangsseitig mittleren Teil über Kontaktkrümmungen 29 verfügt, im umfangsseitig äußeren Teil dagegen über eine Umfangsendkrümmung 30. Diese geometrische Anformung 28 wirkt in nachfolgend noch zu beschreibender Weise mit radial innerhalb der Tilgermassen 7 vorgesehenen Anschlägen 31 zusammen, die an einem ringförmigen Bauteil 32 vorgesehen sind.

Das ringförmige Bauteil 32 verfügt jeweils in Umfangsrichtung zwischen je zwei Tilgermassen 7 über eine Halterung 34, die jeweils ein Abstandsstück 11 umschließt, so dass die Halterung 34 jeweils als Anschlagaufnehmer 35 dient. Das ringförmige Bauteil 32 ist demnach drehfest an den Tilgermassen-Trägerelementen 5 und damit am Tilgermassenträger 3 aufgenommen. Ein sich in Umfangsrichtung erstreckender Ringkörper 33 wirkt zwischen je zwei Anschlagaufnehmern 35 jeweils als Anschlag 31. Am ringförmigen Bauteil 32 sind demnach sämtliche Anschläge 31 sowie sämtliche Anschlagaufnehmer 35 zusammengefasst. Alternativ sind allerdings auch nicht dargestellte Lösungen denkbar, bei denen jeder Anschlag 31 oder eine Teilgruppe von Anschlägen 31 über einen Anschlagaufnehmer 35 oder eine Teilgruppe von Anschlagaufnehmern 35 an einem Trägerbauteil, wie dem Tilgermassenträger 3, aufgenommen sind.

Wie die in Fig. 4 gezeigte Querschnittsdarstellung zeigt, verfügt das ringförmige Bauteil 32 über einen Axialflansch 36 und einen sich mit einer Radialkomponente erstreckenden Versteifungsflansch 38. Der Axialflansch 36 weist an seiner radialen Außenseite ein Anschlagprofil 40 auf, das nicht parallel zur Zentralachse 15 verläuft, sondern sich unter einem Winkel a zumindest im Wesentlichen keilförmig verjüngt. Das ringförmige Bauteil 32 weist damit zumindest am jeweiligen Anschlag 31 ein Anschlagprofil 40 auf, das an einer ersten Axialseite A1des ringförmigen Bauteils 32, in Fig. 4 beispielsweise am axial linken Ende, einen maximalen Radialabstand R1(vgl. Fig. 5 oder 10) gegenüber der Zentralachse 15 aufweist, und an einer zweiten Axialseite A2 des ringförmigen Bauteils 32, in Fig. 4 beispielsweise am axial rechten Ende, einen minimalen Radialabstand R3 gegenüber der Zentralachse 15 aufweist. Der Radialabstand von Anschlagprofil 40 und Zentralachse 15 axial zwischen der ersten Axialseite A1 und der zweiten Axialseite A2 nimmt dagegen Werte an, die bezüglich ihrer Größe zwischen den Radialabständen an den beiden Axialseiten A1, A2 liegen, beispielsweise im axialen Erstreckungsbereich des Tilgermassenelementes 44b den Wert R2.

Ausgehend von der ersten Axialseite A1des ringförmigen Bauteils 32 erfährt der Radialabstand demnach in Erstreckungsrichtung der Zentralachse 15, also in Richtung zur zweiten Axialseite A2 des ringförmigen Bauteils 32, eine Abnahme. Diese Abnahme der Radialabstände bewirkt allerdings eine Zunahme der Radialabstände zwischen dem Anschlagprofil 40 des jeweiligen Anschlags 31 und den Anschlagseiten 42a, 42b, 42c der jeweiligen Tilgermassenelemente 44a bis 44c. Demzufolge ist an der ersten Axialseite A1 der Radialabstand zwischen dem Anschlagprofil 40 und der Anschlagseite 42a am geringsten, an der zweiten Axialseite A2 der Radialabstand zwischen dem Anschlagprofil 40 und der Anschlagseite 42c dagegen am größten. Der Radialabstand von Anschlagprofil 40 und Anschlagseite 42b zwischen der ersten Axialseite A1 und der zweiten Axialseite A2 nimmt dagegen Werte an, die bezüglich ihrer Größe zwischen den Radialabständen an den beiden Axialseiten A1, A2 liegen.

Während das Anschlagprofil 40 bei der in Fig. 5 gezeigten Ausführung einem zumindest im Wesentlichen kontinuierlichen Verlauf folgt, sind ebenso auch nicht gezeigte Ausführungen denkbar, bei denen das Anschlagprofil 40 in Zuordnung zu den einzelnen Tilgermassen-Trägerelementen 5 eine Änderung erfährt, die nicht kontinuierlich, sondern statt dessen beispielsweise stufenförmig erfolgt.

Wenn der Torsionsschwingungsdämpfer 1 mit einer Drehzahl betrieben wird, bei welcher die Fliehkraft die Gewichtskraft übersteigt, streben die Tilgermassen 7 unter der Wirkung der Fliehkraft nach radial außen, so dass sich die Rollkörper 20 jeweils im Ausgangsbereich 24 der jeweiligen Führungsbahn 22 der Tilgermassen 7 positionieren kann. Torsionsschwingungen können zwar Auslenkungen der Tilgermassen 7 in Umfangsrichtung erzwingen, wodurch die Rollkörper 20 aus den Ausgangsbereichen 24 der Führungsbahnen 22 in deren Anschlussbereiche 25 ausgelenkt werden, jedoch erfolgt bei abklingender Torsionsschwingung stets eine Rückstellung der Rollkörper 20 in die Ausgangsposition unter der Wirkung der Fliehkraft.

Fällt die Fliehkraft dagegen unter die Gewichtskraft, beispielsweise bei einem Kriechbetrieb eines Kraftfahrzeuges oder beim Abstellen eines Antriebs, wie beispielsweise einer Brennkraftmaschine, dann fallen die Tilgermassen 7 nach radial innen, um eine in Fig. 2 gezeigte Relativposition zueinander und zum Tilgermassenträger 3 einzunehmen. Bei einem solchen Betriebszustand fallen die beiden sich radial oberhalb der Zentralachse 15 befindlichen Tilgermassen 7 nach radial innen, bis ihre Anschlagseiten 42 mit den daran angeformten Kontaktkrümmungen 29 in Anlage an dem zugeordneten Anschlagprofil 40 des Anschlags 31 am Ringkörper 33 des ringförmigen Bauteils 32 gekommen sind. Sollten die Führungsbahnen 22 eine weitere Bewegung der Tilgermassen 7 nach radial innen zulassen, wird diese Bewegung erst dann enden, wenn die Umfangsendkrümmung 30 der jeweiligen Tilgermasse 7 an der Halterung 34 und damit am Anschlagaufnehmer 35 des ringförmigen Bauteils 32 in Anlage gelangt ist. Die beiden sich radial unterhalb der Zentralachse 15 befindlichen Tilgermassen 7 fallen ebenfalls nach radial innen, bis ihre Anschlagseiten 42 mit den daran angeformten Kontaktkrümmungen 29 in Anlage an dem zugeordneten Anschlagprofil 40 des Anschlags 31 am Ringkörper 33 des ringförmigen Bauteils 32 gekommen sind, und bis zudem die Umfangsendkrümmung 30 der jeweiligen Tilgermasse 7 an der Halterung 34 und damit am Anschlagaufnehmer 35 des ringförmigen Bauteils 32 in Anlage gelangt ist. Auf diese Weise wird verhindert, dass die beiden sich radial unterhalb der Zentralachse 15 befindlichen Tilgermassen 7 mit ihren Umfangsendkanten in Anlage aneinander gelangen.

Durch die Ausbildung des am jeweiligen Anschlag 31 vorgesehene Anschlagprofils 40 mit einem Winkel a relativ zur Zentralachse 15 wird erreicht, dass die Anschlagseiten 42a bis 42c der einzelnen Tilgermassenelemente 44a bis 44c in einem Betriebszustand, bei welchem die Fliehkraft die Gewichtskraft übersteigt, wie dies in Fig. 10 dargestellt ist, mit unterschiedlichen Fallhöhen F1 bis F3 (vgl. Fig. 11) gegenüber dem Anschlagprofil 40 ausgerichtet sind, um dann, wenn ein Betriebszustand eintritt, bei welchem die Fliehkraft die Gewichtskraft unterschreitet, nacheinander auf dem Anschlagprofil 40 aufzutreffen. Das Tilgermassenelement 44a, dessen Anschlagseite 42a die geringste Fallhöhe F1 zum Anschlagprofil 40 aufweist, wird als erstes Tilgermassenelement 44a am Anschlagprofil 40 des Anschlags 31 zur Anlage kommen, während die weiteren Tilgermassenelemente 44b und 44c zeitlich versetzt nacheinander auf dem Anschlagprofil 40 des Anschlags 31 auftreffen. Da das einzelne Tilgermassenelement 44a bis 44c nur über ein Teilgewicht der gesamten Tilgermasse 7 verfügt, wird das Auftreffen auf den Anschlag 31 geräuschärmer erfolgen, als dies bei der gesamten Tilgermasse 7 der Fall wäre.

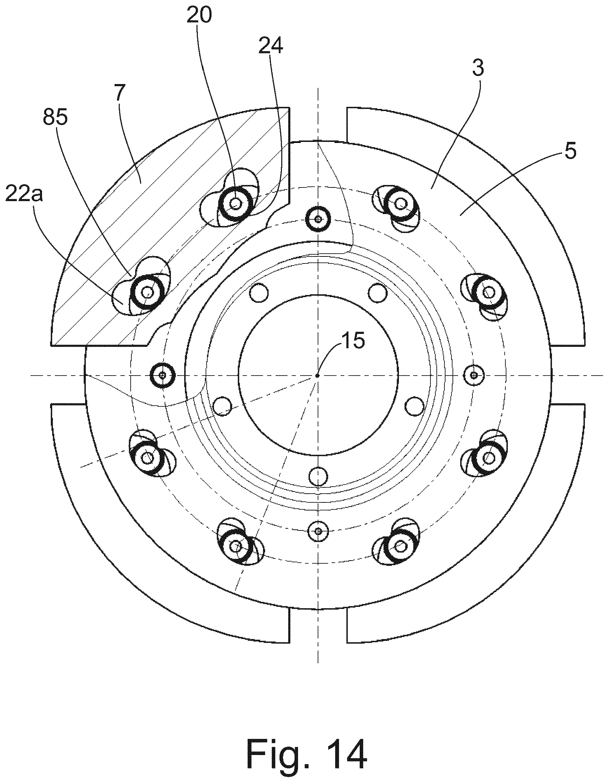

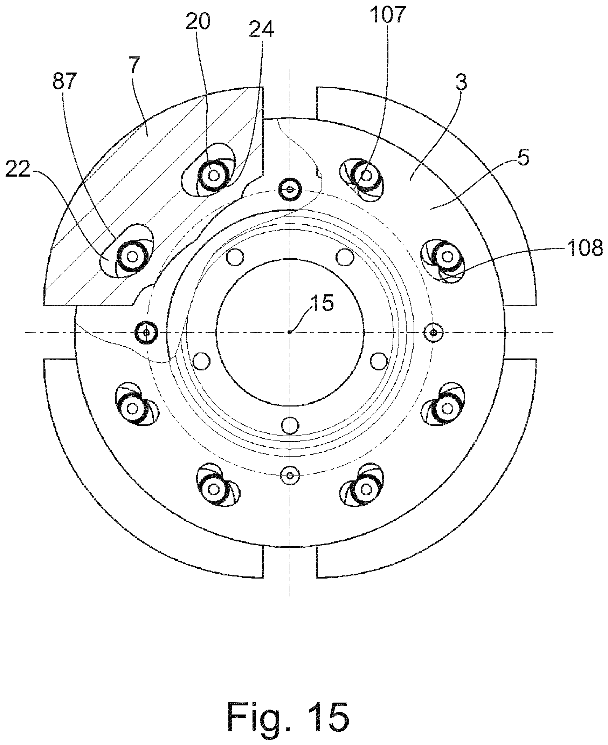

Es gibt eine weitere Maßnahme, um das Auftreffen auf den Anschlag 31 geräuschärmer zu gestalten, wobei diese Maßnahme aus Fig. 1 und 2 bereits hervorgeht, nachfolgend aber unter Bezugnahme auf die Fig. 14 oder 15 erläutert werden soll. Während die in Fig. 14 gezeigten, dem Stand der Technik entsprechenden Führungsbahnen 22a gegenüberliegend zum jeweiligen Ausgangsbereich 24a über eine Einschnürung 85 verfügen, sind die Führungsbahnen 22 an der vergleichbaren Stelle gemäß Fig. 15 zumindest im Wesentlichen mit einer Planausformung 87 ausgebildet, gemäß Fig. 1 oder 2 dagegen sogar mit einer Aufweitung 88 in vom Ausgangsbereich 24 fortweisender Richtung. Die Ausformung der Führungsbahn 22 mit einer Planausformung 87 oder mit einer Aufweitung 88 ist bei einem Wechsel des Betriebszustandes von Vorteil, wenn nämlich durch ein Absinken der Betriebsdrehzahl eine bislang oberhalb der Gewichtskraft liegende Fliehkraft unter die Gewichtskraft fällt. Die Tilgermassen 7 werden dann, wie zu Fig. 2 bereits beschrieben, der Gewichtskraft folgend nach unten fallen. Bei Ausführung der Führungsbahnen 22 gemäß Fig. 14 muss dann der jeweilige Rollkörper 20 über diese Einschnürung 85 abrollen, wodurch ein Impuls erzeugt wird, der beim darauf folgenden Fallen der Tilgermassen 7 ein erhebliches Geräusch erzeugt. Durch Ausformung der Führungsbahn 22 mit einer Planausformung 87 oder mit einer Aufweitung 88 können sich die Tilgermassen 7 mittels der jeweiligen Rollkörper 20 entlang der Außenkontur der Führungsbahnen 22 weitgehend frei von einem störenden Impuls entlangbewegen, und treffen daher geräuschärmer auf den zugeordneten Anschlag 31. Ein vergleichbarer Vorteil ergibt sich, wenn die Führungsbahnen 13 in den Tilgermassen-Trägerelementen 5 des Tilgermassenträgers 3 ebenfalls mit einer Planausformung 107 oder einer Aufweitung 108 ausgebildet sind, dort allerdings jeweils an der radial inneren Seite. Die Planausformung 107 ist ebenso wie die Aufweitung 108 jeweils in Fig. 15 mit gestrichelter Linierung angegeben. Selbstverständlich sind bei Realisierung der Planausformung 107 oder der Aufweitung 108 zumindest ein Teil der Führungsbahnen 13 in entsprechender Weise ausgebildet, und nicht nur die in Fig. 15 jeweils gezeigte eine Führungsbahn 13.

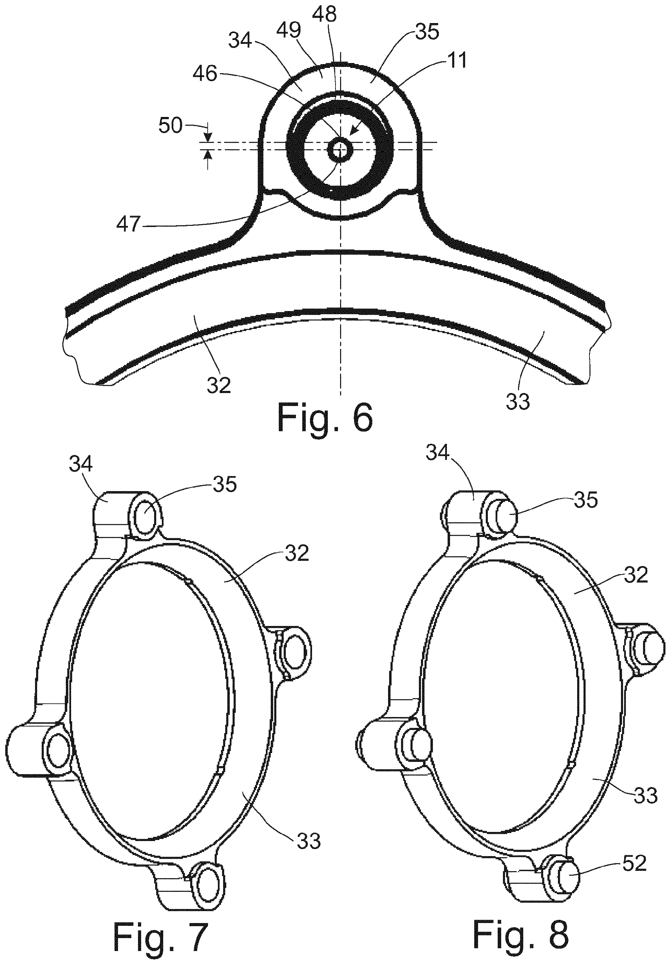

Wie bereits geschildert, kommt bei Betriebszuständen, bei denen die Fliehkraft unter die Gewichtskraft fällt, die Umfangsendkrümmung 30 des jeweiligen Tilgermassenelementes 44a bis 44c an der Halterung 34 und damit am Anschlagaufnehmer 35 des ringförmigen Bauteils 32 in Anlage. Um dieses Auftreffen des jeweiligen Tilgermassenelementes 44a bis 44c zu dämpfen, ist die Halterung 34 und damit der Anschlagaufnehmer 35 gemäß Fig. 6 derart ausgebildet, dass seine Mittenachse 46 um einen Achsversatz 50 von der Mittenachse 47 des jeweiligen Anschlagstückes 11 versetzt ist. Die Anschlagstücke 11 sind derart angeordnet, dass sie sich beim Aufsetzen des ringartigen Bauteils 32 im radial inneren Bereich der jeweiligen Halterung 34 befinden. Dadurch entsteht in der Halterung 34 radial außerhalb des jeweiligen Anschlagstückes 11 ein Freiraum 48, der im Rahmen der Elastizität der Wandung 49 der Halterung 34 eine Nachgiebigkeit dieser Wandung 49 ermöglicht.

Während das ringförmige Bauteil 32 gemäß Fig. 7 die bislang beschriebene Ausführung der Anschlagaufnehmer 35 darstellt, nämlich mit zur Aufnahme der Abstandsstücke 11 bestimmter Halterung 34, zeigt Fig. 8 eine Ausführung der Anschlagaufnehmer 35, bei welcher Zapfen 52 in den Halterungen 34 befestigt sind und axial über die Halterungen 34 hinausgreifen, um in entsprechende Ausnehmungen der Tilgermassen-Trägerelemente 5 einzugreifen.

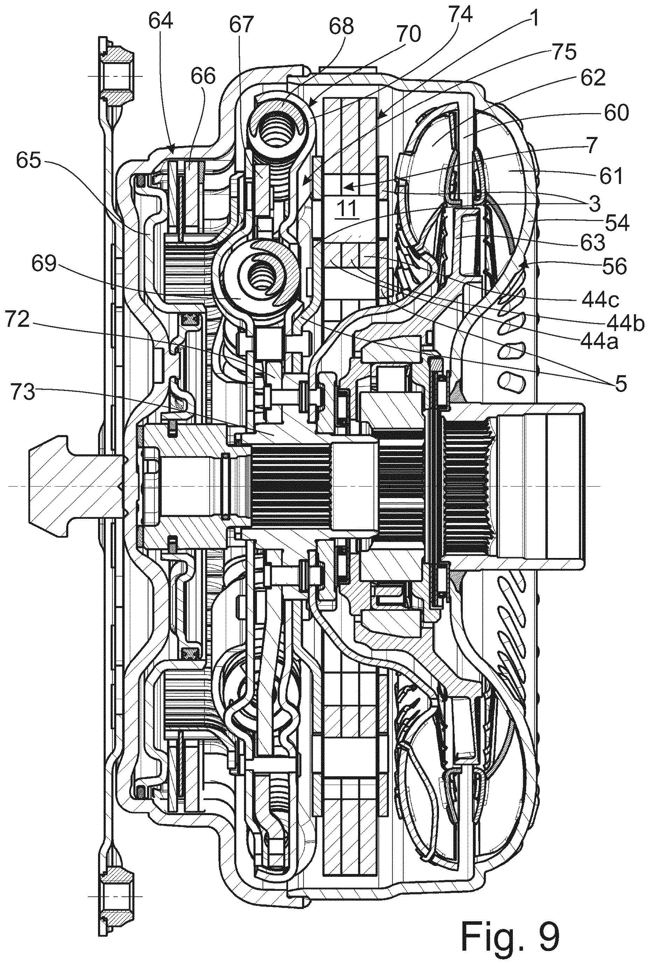

Gemäß Fig. 9 ist der Torsionsschwingungsdämpfer 1 im Gehäuse 54 einer hydrodynamischen Kopplungsanordnung 56 vorgesehen. Diese hydrodynamische Kopplungsanordnung 56 weist einen hydrodynamischen Kreis 60 mit Pumpenrad 61, Turbinenrad 62 und Leitrad 63 auf, sowie eine Kupplungsvorrichtung 64, die über einen Kupplungskolben 65 sowie eine Reibscheibenkupplung 66 verfügt. In Abhängigkeit von der Ansteuerung des Kupplungskolbens 65 ist die Kupplungsvorrichtung 64 zwischen einer Einrückposition und einer Ausrückposition bewegbar. Die Kupplungsvorrichtung 64 ist mit einem Torsionsdämpfereingang 67 einer über zwei Umfangsfedersätze 68, 69 verfügenden Dämpfungseinrichtung 70 verbunden, deren Torsionsdämpferausgang 72 mit einem Abtrieb 73 zusammenwirkt. Zwischen den beiden Umfangsfedersätzen 68, 69 ist ein Torsionsdämpfer-Zwischenbauteil 74 wirksam, an welchem ein Tilgermassen-Trägerelement 5 des Tilgermassenträgers 3 des Torsionsschwingungsdämpfers 1 drehfest aufgenommen ist. Die Dämpfungseinrichtung 70 bildet zusammen mit dem Torsionsschwingungsdämpfer leine Torsionsschwingungs-Dämpfereinheit 75.

Von dem Torsionsschwingungsdämpfer 1 sind in Fig. 9 außer den beiden Trägerelementen 5 des Tilgermassenträgers 3 die dieselben miteinander verbindenden Abstandsstücke 11 sowie die Tilgermassenelemente 44a bis 44c der Tilgermasse 7 deutlich erkennbar. Die gleichen Bauteile sind auch in Fig. 10 gezeigt, darüber hinausgehend aber auch das über das Anschlagprofil 40 verfügende und daher als Anschlag 31 wirksame ringförmige Bauteil 32. Wie Fig. 10 deutlich erkennen lässt, befindet sich das ringförmige Bauteil 32 radial innerhalb der Tilgermassenelemente 44a bis 44c, und axial zwischen den Tilgermassen-Trägerelementen 5. Obwohl das ringförmige Bauteil 32 in bereits beschriebener Weise über Abstandsstücke 11 an den Tilgermassen-Trägerelementen 5 aufgenommen ist, stützt es sich mit seiner radialen Innenseite an einer Turbinenradnabe 77 ab, die am Abtrieb 73 befestigt ist.

Bei der Ausführung gemäß Fig. 11 sind zwar Abstandsstücke 11 vorhanden, jedoch übernehmen diese im Hinblick auf das ringförmige Bauteil 32 keine Funktion. Stattdessen stützt sich das ringförmige Bauteil 32 mit seiner radialen Innenseite an der Turbinenradnabe 77 ab, und ist über entlang des Umfangs verteilte Haltevorsprünge 79, die jeweils zugeordnete Ausnehmungen 80 der Turbinenradnabe 77 durchgreifen, an der Turbinenradnabe 79 und damit am Turbinenrad 62 befestigt, indem die Haltevorsprünge 79 an ihren freien Enden Rastnasen 81 aufweisen , mit denen sie die Turbinenradnabe 79 hintergreifen.

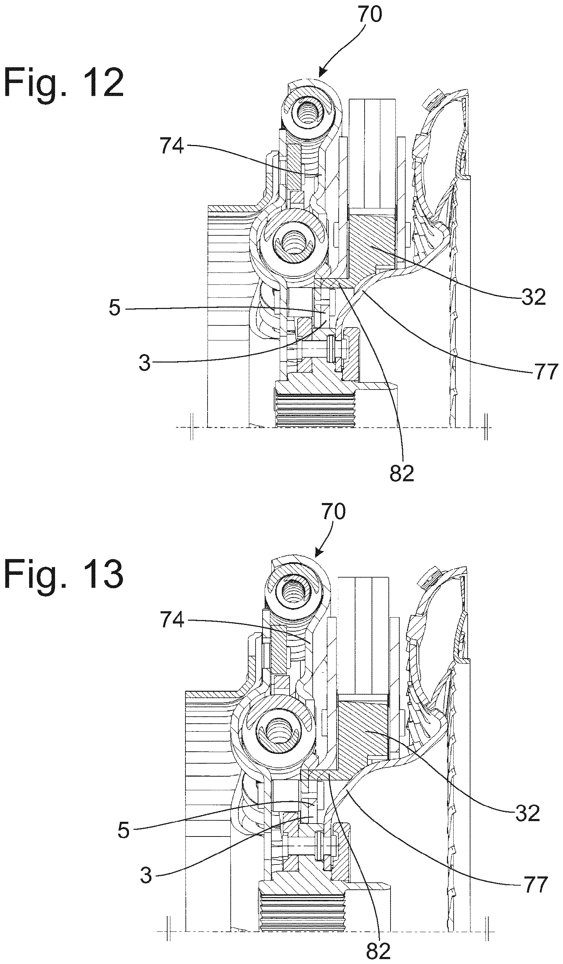

Alternativ kann das ringförmige Bauteil 32 aber auch gemäß Fig. 12 oder 13 am Torsionsdämpfer-Zwischenbauteil 74 der Dämpfungseinrichtung 70 mittels Haltevorsprüngen 82 befestigt sein. Hierzu greifen die Haltevorsprünge 82 in entsprechende Ausnehmungen 83 des zum Torsionsdämpfer-Zwischenbauteil 74 benachbarten Tilgermassen-Trägerelementes 5 in nicht näher dargestellter Weise ein. Das ringförmige Bauteil 32 kann sich hierzu gemäß Fig. 13 mit seiner radialen Innenseite an der Turbinenradnabe 77 abstützen, kann aber auch gemäß Fig. 12 unabhängig von der Turbinenradnabe 77 wirksam sein.

Die Haltevorsprünge 79 oder 82 bilden alternative Ausführungen des Anschlagaufnehmers 35, anstelle von Abstandsstück 11 oder Zapfen 52.

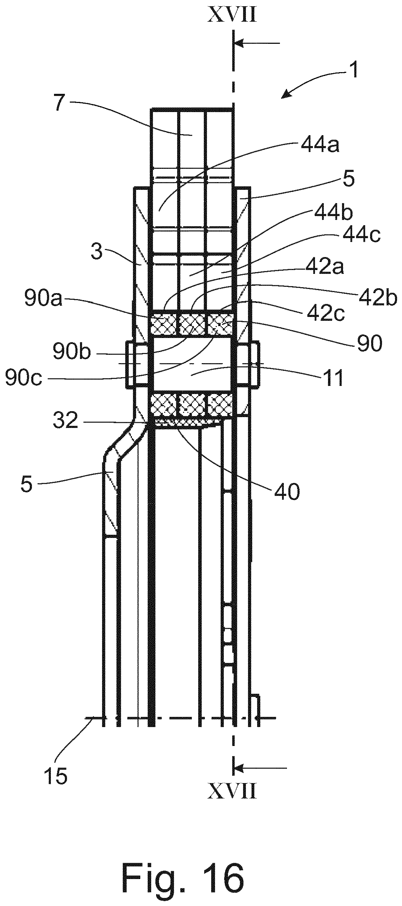

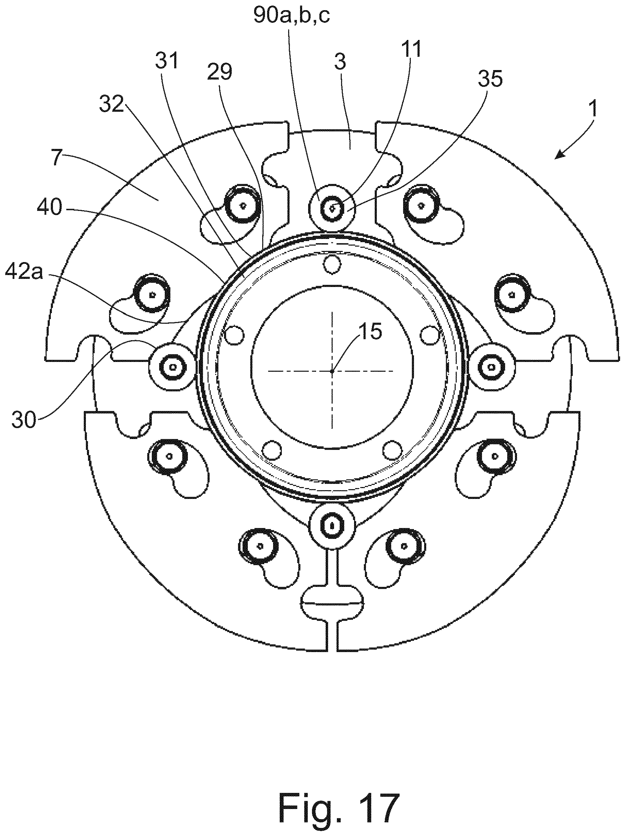

Die in Fig. 16 und 17 gezeigte Ausführung des Torsionsschwingungsdämpfers 1 zeigt wiederum die Abstandsstücke 11 zur Verbindung der Tilgermassen-Trägerelemente 5 der Tilgermassenträger 3. Diese Abstandsstücke 11 sind entweder umkleidet durch eine Mehrzahl ringförmiger Umhüllungen 90a, 90b, 90c, wobei jede ringförmige Umhüllung 90a bis 90c jeweils einem Tilgermassenelement 44a bis 44c zugeordnet ist, oder aber die Abstandsstücke 11 sind umkleidet durch jeweils eine einzelne buchsenförmige Umhüllung, der sämtliche Tilgermassenelemente 44a bis 44c zugeordnet sind. Mit Vorzug bestehen diese Umhüllungen 90a bis 90c aus Kunststoff, und vermögen so den Anschlag zu dämpfen, wenn die jeweilige Umfangsendkrümmung 30 der Anschlagseiten 42a bis 42c der Tilgermassenelemente 44a, 44b, 44c in Wirkkontakt mit den Umhüllungen 90a bis 90c der Abstandsstücke 11 gelangen. Darüber hinaus kommt den Abstandsstücken 11 die Aufgabe zu, das ringförmige Bauteil 32 gegenüber der Zentralachse 15 zu zentrieren, so dass auch bei dieser Ausführung an dem ringförmigen Bauteil 32 vorgesehene Anschläge 31 vorhanden sind, an welchen die Kontaktkrümmungen 29 der Anschlagseiten 42a bis 42c der Tilgermassenelemente 44a bis 44c in Betriebszuständen zur Anlage gelangen, bei denen die Fliehkraft unter die Gewichtskraft fällt. Selbstverständlich sind die Anschläge 31 mit einem Anschlagprofil 40 ausgebildet, wie dies bei den vorangegangenen Ausführungen ausführlich beschrieben ist. Bezogen auf das ringförmige Bauteil 32 wirken auch bei dieser Ausführung die Abstandsstücke 11 als Anschlagaufnehmer 35, jedoch nehmen diese das ringförmige Bauteil 32, abweichend zu den bisherigen Ausführungen, nicht formschlüssig auf. Statt dessen kann das ringförmige Bauteil durch die Anschlagaufnehmer 35 kraftschlüssig gehalten und daher bewegungsgleich mit diesen sein, es kann aber auch, wenn keine kraftschlüssige Verbindung zu den Anschlagaufnehmern 35 besteht, eine Relativbewegung des ringförmigen Bauteils 32 gegenüber den Abstandsstücken 11 und damit gegenüber den Tilgermassen 7 gegeben sein. Bei schwimmender Lagerung des ringförmigen Bauteils 32 gegenüber den Abstandsstücken 11 kann das ringförmige Bauteil 32 über eine gesteigerte Nachgiebigkeit und damit über verbesserte Dämpfungseigenschaften verfügen, wenn die Tilgermassenelemente 44a bis 44c mit ihren Anschlagseiten 42a bis 42c in Anlage gelangen.

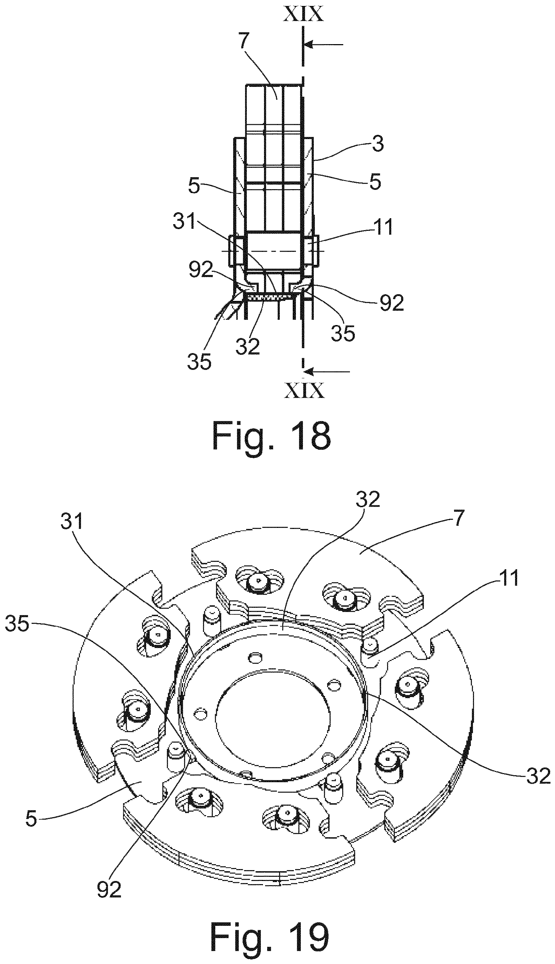

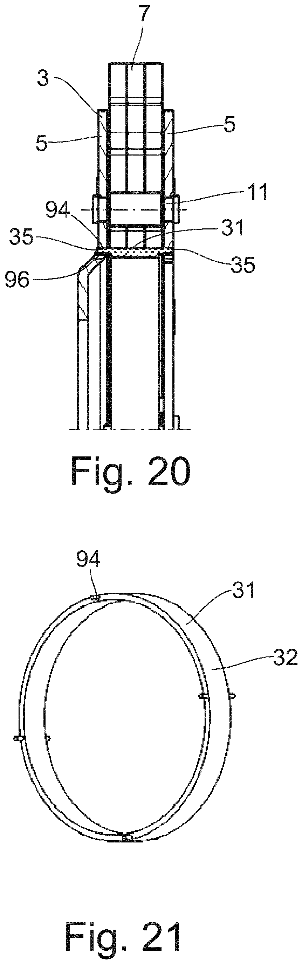

Die Fig. 18 und 19 sowie 20 und 21 zeigen alternative Ausführungen zu den Fig. 16 und 17. Bei den Fig. 18 und 19 sind an den Tilgermassen-Trägerelementen 5 des Tilgermassenträgers 3 bevorzugt im Umfangsbereich der Abstandsstücke 11, aber radial innerhalb derselben, Axialumbiegungen 92 vorhanden, welche anstelle der Abstandsstücke 11 das ringförmige Bauteil 32 zentrierend umgreifen. Bei den Fig. 20 und 21 sind an den Tilgermassen-Trägerelementen 5 des Tilgermassenträgers 3, ebenfalls bevorzugt im Umfangsbereich der Abstandsstücke 11, aber radial innerhalb derselben, Axialausnehmungen 96 vorgesehen, in welchen am ringförmigen Bauteil vorgesehene Axialvorsprünge 94 eingreifen. Hier wird das ringförmige Bauteil 32 mittels der Axialvorsprünge zentriert. Die Axialumbiegungen 92 sind demnach ebenso wie die Axialvorsprünge 94 in Verbindung mit den Axialausnehmungen 96 jeweils als Anschlagaufnehmer 35 für am jeweiligen ringförmigen Bauteil 32 vorgesehene Anschläge 31 wirksam.

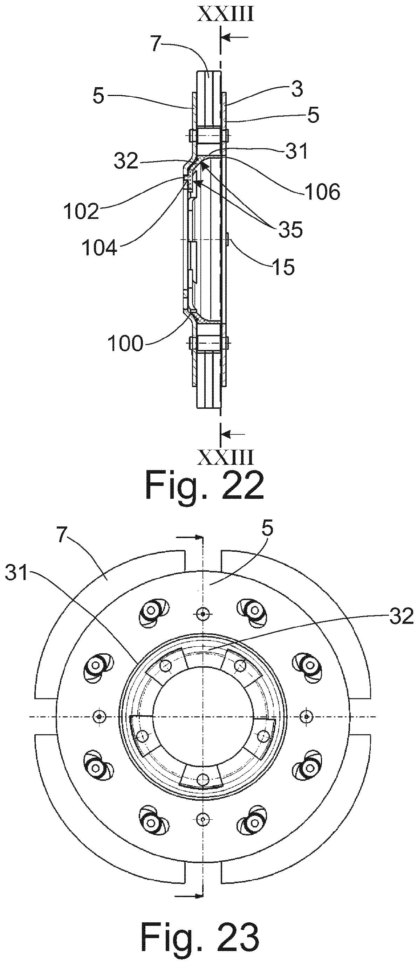

Die Fig. 22 und 23 schließlich zeigen ein ringförmiges Bauteil 32, das, wie Fig. 22 erkennen lässt, in Erstreckungsrichtung der Zentralachse 15 mit vergleichbarer Profilierung 100 ausgebildet ist wie das benachbarte Tilgermassen-Trägerelement 5 des Tilgermassenträgers 3, und dadurch radial gegenüber diesem Tilgermassen-Trägerelement 5 zentriert ist. Alternativ oder ergänzend kann das ringförmige Bauteil 32 an seiner dem benachbarten Tilgermassen-Trägerelement 5 zugewandten Seite Axialvorsprünge 102 aufweisen, die in entsprechende Ausnehmungen 104 des Tilgermassen-Trägerelementes 5 eingreifen, und dadurch eine radiale Relativbewegbarkeit gegenüber dem Tilgermassen-Trägerelement 5 unterbinden. Die Profilierung 100 und/oder die Axialvorsprünge 102 in Verbindung mit den Ausnehmungen 104 wirken demnach als Anschlagaufnehmer 35 für am jeweiligen ringförmigen Bauteil 32 vorgesehene Anschläge 31.

Zugunsten einer axialen Positionierung des ringförmigen Bauteils 32 in Bezug zum Tilgermassenträger 3 stützt sich das ringförmige Bauteil 32 mit seinem axial freien Ende 106 am entsprechenden Tilgermassen-Trägerelement 5 axial ab.

### Bezugszeichen

- 1: Torsionsschwingungsdämpfer
- 3: Tilgermassenträger
- 5: Tilgermassen-Trägerelemente
- 7: Tilgermassen
- 11: Abstandsstücke
- 13: Führungsbahnen
- 14: Ausgangsbereich
- 15: Zentralachse
- 17: Anschlussbereiche
- 18: Umfangsende
- 20: Rollkörper
- 22: Führungsbahn
- 24: Ausgangsbereich
- 25: Anschlussbereich
- 26: Umfangsende
- 28: geometrische Anformung
- 29: Kontaktkrümmung
- 30: Umfangsendkrümmung
- 31: Anschlag
- 32: ringförmiges Bauteil
- 33: Ringkörper
- 34: Halterung
- 35: Anschlagaufnehmer
- 36: Axialflansch
- 38: Versteifungsflansch
- 40: Anschlagprofil
- 42: Anschlagseite
- 44: Tilgermassenelemente
- 46: Mittenachse
- 47: Mittenachse
- 48: Freiraum
- 49: Wandung
- 50: Achsversatz
- 52: Zapfen
- 54: Gehäuse
- 56: Kopplungsanordnung
- 60: hydrodynamischer Kreis
- 61: Pumpenrad
- 62: Turbinenrad
- 63: Leitrad
- 64: Kupplungsvorrichtung
- 65: Kupplungskolben
- 66: Reibscheibenkupplung
- 67: Torsionsdämpfereingang
- 68: Umfangsfedersatz radial außen
- 69: Umfangsfedersatz radial innen
- 70: Dämpfungseinrichtung
- 72: Torsionsdämpferausgang
- 73: Abtrieb
- 74: Torsionsdämpfer-Zwischenbauteil
- 75: Torsionsschwingungs-Dämpfereinheit
- 77: Turbinenradnabe
- 79: Haltevorsprung
- 80: Ausnehmung
- 81: Rastnase
- 82: Haltevorsprung
- 83: Ausnehmung
- 85: Einschnürung
- 87: Planausformung
- 88: Aufweitung
- 90: Umhüllung
- 92: Axialumbiegung
- 94: Axialvorsprung
- 96: Axialausnehmung
- 100: Profilierung
- 102: Axialvorsprung
- 104: Ausnehmung
- 106: axial freies Ende des ringförmigen Bauteils
- 107: Planausformung
- 108: Aufweitung

## Patentansprüche

1. Torsionsschwingungsdämpfer (1) mit einem Tilgermassenträger (3), an welchem zumindest eine relativ zu demselben bewegbar aufgenommene Tilgermasse (7) aufgenommen ist, sowie mit wenigstens einem Anschlag (31), wobei je einer Anschlagseite (42a bis 42c) der zumindest einen Tilgermasse (7) jeweils wenigstens ein Anschlag (31) zugeordnet ist, und wobei die zumindest eine Tilgermasse (7) sowie der Anschlag (31) über eine Ausdehnung in Erstreckungsrichtung einer Zentralachse (15) verfügen, **dadurch gekennzeichnet, dass** die zumindest eine Tilgermasse (7) in Erstreckungsrichtung der Zentralachse (15) eine Mehrzahl von Tilgermassenelementen (44a bis 44c) aufweist und der Anschlag (31) an seiner den Anschlagseiten (42a bis 42c) der Tilgermassenelemente (44a bis 44c) zugewandten Seite in Erstreckungsrichtung der Zentralachse (15) über ein Anschlagprofil (40) verfügt, das in Zuordnung zu den Tilgermassenelementen (44a bis 44c) unterschiedliche Radialabstände (R1 bis R3) gegenüber der Zentralachse (15) aufweist.

2. Torsionsschwingungsdämpfer nach Anspruch 1, **dadurch gekennzeichnet, dass** das Anschlagprofil (40) des Anschlages (31) in Zuordnung zu einem ersten Tilgermassenelement (44a) einen maximalen Radialabstand (R1) zur Zentralachse (15) aufweist, in Zuordnung zu einem zweiten Tilgermassenelement (44c) einen minimalen Radialabstand (R3) aufweist, und in Zuordnung zu zumindest einem weiteren Tilgermassenelement (44b) einen Radialabstand (R2) aufweist, der betragsmäßig zwischen dem maximalen Radialabstand (R1) und dem minimalen Radialabstand (R3) liegt.

3. Torsionsschwingungsdämpfer nach Anspruch 1, **dadurch gekennzeichnet, dass** das erste Tilgermassenelement (44a) an einer ersten Axialseite (A1) der Tilgermasse (7) vorgesehen ist, das zweite Tilgermassenelement (44c) an einer zweiten Axialseite (A2) der Tilgermasse, und das zumindest eine weitere Tilgermassenelement (44b) axial zwischen dem ersten Tilgermassenelement (44a) und dem zweiten Tilgermassenelement (44c).

4. Torsionsschwingungsdämpfer nach Anspruch 2 und 3, **dadurch gekennzeichnet, dass** die Änderung des Radialabstandes (R1 bis R3) zwischen dem Anschlagprofil (40) des Anschlages (31) und der Zentralachse (15) zwischen der ersten Axialseite (A1) der Tilgermasse (7) und der zweiten Axialseite (A2) der Tilgermasse (7) einem zumindest im Wesentlichen kontinuierlichen Verlauf folgt.

5. Torsionsschwingungsdämpfer nach Anspruch 4, **dadurch gekennzeichnet, dass** das Anschlagprofil (40) des Anschlages (31) sich, ausgehend von der ersten Axialseite (A1) der Tilgermasse (7), in Richtung zur zweiten Axialseite (A2) der Tilgermasse (7) unter einem Winkel (a) zumindest im Wesentlichen keilförmig verjüngt.

6. Torsionsschwingungsdämpfer nach Anspruch 1, **dadurch gekennzeichnet, dass** bei einer Mehrzahl von Anschlägen (31) für die Tilgermassen (7) die Anschläge (31) in Umfangsrichtung zwischen je zwei Tilgermassen (7) festgelegt sind.

7. Torsionsschwingungsdämpfer nach Anspruch 6, **dadurch gekennzeichnet, dass** die Anschläge (31) für die Tilgermassen (7) mittels wenigstens eines Anschlagaufnehmers (35) festgelegt sind.

8. Torsionsschwingungsdämpfer nach Anspruch 7, **dadurch gekennzeichnet, dass** sich der wenigstens eine Anschlag (31) zumindest innerhalb des Bereichs zwischen dem zugeordneten Anschlagaufnehmer (35) und den beidseits dieses Anschlagaufnehmers (35) vorgesehenen Tilgermassen (7) erstreckt.

9. Torsionsschwingungsdämpfer nach Anspruch 8, **dadurch gekennzeichnet, dass** der Anschlag (31) in Zuordnung zum jeweiligen Anschlagaufnehmer (35) mit wenigstens einer Halterung (34) versehen ist, welche den Anschlagaufnehmer (35) umschließt.

10. Torsionsschwingungsdämpfer nach Anspruch 9, **dadurch gekennzeichnet, dass** die wenigstens eine Halterung (34) des Anschlags (31) gegenüber dem zugeordneten Anschlagaufnehmer (35) zur Bildung eines Freiraums (48) mit einem Achsversatz (50) ausgebildet ist.

11. Torsionsschwingungsdämpfer nach Anspruch 7, **dadurch gekennzeichnet, dass** der wenigstens eine Anschlagaufnehmer (35) für die Anschläge (31) durch zumindest einen Haltevorsprung (79; 82) gebildet ist, der nach Durchgriff durch eine zugeordnete Ausnehmung (80) oder durch Eingriff in eine zugeordnete Ausnehmung (83) eines Bauteils (62; 70) einer Kopplungsanordnung (56) durch dieses Bauteil (62; 70) fest gehalten ist.

12. Torsionsschwingungsdämpfer nach Anspruch 1, **dadurch gekennzeichnet, dass** der zumindest eine Anschlag (31) für die Tilgermasse (7) in Umfangsrichtung relativ zur Tilgermasse (7) verlagerbar ist.

13. Torsionsschwingungsdämpfer nach Anspruch 12, **dadurch gekennzeichnet, dass** dem zumindest einen Anschlag (31) für die Tilgermasse (7) wenigstens ein Anschlagaufnehmer (35) zugeordnet ist, der eine Zentrierung des Anschlags (31) gegenüber der Zentralachse (15) bewirkt.

14. Torsionsschwingungsdämpfer nach Anspruch 13, **dadurch gekennzeichnet, dass** dem zumindest einen Anschlagaufnehmer (35) eine Umhüllung (90) zugeordnet ist.

15. Torsionsschwingungsdämpfer nach Anspruch 1, **dadurch gekennzeichnet, dass** der Anschlag (31) sich mit seiner radialen Innenseite an einem Bauteil (62) der Kopplungsanordnung (56) abstützt.

16. Torsionsschwingungsdämpfer nach Anspruch 1, **dadurch gekennzeichnet, dass** die Anschlagseiten (42a bis 42c) der Tilgermassenelemente (44a bis 44c) bezüglich ihrer Geometrie an die Ausbildung des Anschlagprofils (40) des Anschlages (31) angepasst sind.

17. Torsionsschwingungsdämpfer nach Anspruch 1, bei welchem der Tilgermassenträger (3), bezogen auf jede Tilgermasse (7), über zwei erste Führungsbahnen (13) verfügt, die mit zwei zweiten Führungsbahnen (22) der jeweiligen Tilgermasse (7) zusammen wirken, wobei Rollkörper (20) zur relativ bewegbaren Aufnahme der Tilgermassen (7) am Tilgermassenträger (3) die ersten Führungsbahnen (13) und die zweiten Führungsbahnen (22) miteinander verbinden, **dadurch gekennzeichnet, dass** die zweiten Führungsbahnen (22) im radial äußeren Bereich und/oder die Führungsbahnen (13) im radial inneren Bereich über eine Planausformung (87; 107) oder über eine Aufweitung (88; 108) verfügen, so dass die radiale Erstreckung der jeweiligen Führungsbahn (22; 13) im Umfangsbereich des jeweiligen Ausgangsbereichs (24), also im Bereich des geringsten radialen Abstandes zur Zentralachse (15), ein Maximum annimmt.

18. Torsionsschwingungsdämpfer nach Anspruch 1, **dadurch gekennzeichnet, dass** für eine Mehrzahl von Tilgermassen (7) die Anschläge (31) an einem gemeinsamen, vorzugsweise ringförmigen Bauteil (32) zusammengefasst sind.

19. Torsionsschwingungsdämpfer nach Anspruch 1, **dadurch gekennzeichnet, dass** die Anschläge (31) für die Tilgermassen (7) radial innerhalb der Tilgermassen (7) angeordnet sind.

20. Torsionsschwingungsdämpfer nach Anspruch 1, **dadurch gekennzeichnet, dass** die Anschläge (31) für die Tilgermassen (7) am Tilgermassenträger (3), an einem Bauteil (74) einer Dämpfungseinrichtung (70) der Kopplungsanordnung (56) oder an einem Bauteil 62 der Kopplungsanordnung (56) befestigt oder zumindest zentriert sind.

21. Torsionsschwingungsdämpfer nach Anspruch 1 mit einer zur Aufnahme desselben vorgesehenen Kopplungsanordnung (56), **dadurch gekennzeichnet, dass** die Kopplungsanordnung (56) über eine Torsionsschwingungs-Dämpfereinheit (75) verfügt, bei welcher die wenigstens einen Umfangsfedersatz (68, 69) aufweisende Dämpfungseinrichtung (70) einen Torsionsdämpfereingang (67) und einen Torsionsdämpferausgang (72) aufweist, wobei der Torsionsdämpfereingang (67), der Torsionsdämpferausgang (72) oder ein zwischen Torsionsdämpfereingang (67) und Torsionsdämpferausgang (72) befindliches Torsionsdämpfer-Zwischenbauteil (74) zur drehfesten Aufnahme zumindest eines Tilgermassen-Trägerelementes (5) des Tilgermassenträgers (3) vorgesehen ist.

22. Torsionsschwingungsdämpfer nach Anspruch 21, **dadurch gekennzeichnet, dass** die Torsionsschwingungs-Dämpfereinheit (75) mit einer Kupplungsvorrichtung (64) zusammen wirkt.

## Claims

1. Torsional vibration damper (1) having an absorber mass carrier (3), on which there is held at least one absorber mass (7) which is held so as to be movable relative to said absorber mass carrier, and having at least one stop (31), wherein in each case one stop side (42a to 42c) of the at least one absorber mass (7) is assigned in each case at least one stop (31), and wherein the at least one absorber mass (7) and the stop (31) have an extent in a direction of extent of a central axis (15), **characterized in that** the at least one absorber mass (7) has a multiplicity of absorber mass elements (44a to 44c) in a direction of extent of the central axis (15), and the stop (31) has, on its side which faces toward the stop sides (42a to 42c) of the absorber mass elements (44a to 44c) in the direction of extent of the central axis (15), a stop profile (40) which has, assigned to the absorber mass elements (44a to 44c), different radial spacings (R1 to R3) in relation to the central axis (15).

2. Torsional vibration damper according to Claim 1, **characterized in that** the stop profile (40) of the stop (31) has, assigned to a first absorber mass element (44a), a maximum radial spacing (R1) to the central axis (15), assigned to a second absorber mass element (44c), a minimum radial spacing (R3), and assigned to at least one further absorber mass element (44b), a radial spacing (R2) which, in terms of magnitude, lies between the maximum radial spacing (R1) and the minimum radial spacing (R3).

3. Torsional vibration damper according to Claim 1, **characterized in that** the first absorber mass element (44a) is provided at a first axial side (A1) of the absorber mass (7), the second absorber mass element (44c) is provided at a second axial side (A2) of the absorber mass, and the at least one further absorber mass element (44b) is provided axially between the first absorber mass element (44a) and the second absorber mass element (44c).

4. Torsional vibration damper according to Claim 2 and 3, **characterized in that** the change in the radial spacing (R1 to R3) between the stop profile (40) of the stop (31) and the central axis (15) follows an at least substantially continuous profile between the first axial side (A1) of the absorber mass (7) and the second axial side (A2) of the absorber mass (7).

5. Torsional vibration damper according to Claim 4, **characterized in that** the stop profile (40) of the stop (31) narrows in an at least substantially wedge-shaped manner at an angle (a) proceeding from the first axial side (A1) of the absorber mass (7) in the direction of the second axial side (A2) of the absorber mass (7).

6. Torsional vibration damper according to Claim 1, **characterized in that**, in the case of a multiplicity of stops (31) for the absorber masses (7), the stops (31) are fixed in a circumferential direction between in each case two absorber masses (7).

7. Torsional vibration damper according to Claim 6, **characterized in that** the stops (31) for the absorber masses (7) are fixed by means of at least one stop receiver (35).

8. Torsional vibration damper according to Claim 7, **characterized in that** the at least one stop (31) extends at least within the region between the associated stop receiver (35) and the absorber masses (7) provided to both sides of said stop receiver (35).

9. Torsional vibration damper according to Claim 8, **characterized in that** the stop (31) is equipped, in a manner assigned to the respective stop receiver (35), with at least one holder (34) which surrounds the stop receiver (35).

10. Torsional vibration damper according to Claim 9, **characterized in that** the at least one holder (34) of the stop (31) is designed, in relation to the associated stop receiver (35), to form a free space (48) with an axial offset (50).

11. Torsional vibration damper according to Claim 7, **characterized in that** the at least one stop receiver (35) for the stops (31) is formed by at least one holding projection (79; 82) which, after extending through an associated recess (80) or as a result of engaging into an associated recess (83) of a component (62; 70) of a coupling arrangement (56), is held fixedly by said component (62; 70).

12. Torsional vibration damper according to Claim 1, **characterized in that** the at least one stop (31) for the absorber mass (7) is displaceable in a circumferential direction relative to the absorber mass (7) .

13. Torsional vibration damper according to Claim 12, **characterized in that** the at least one stop (31) for the absorber mass (7) is assigned at least one stop receiver (35) which effects centring of the stop (31) relative to the central axis (15).

14. Torsional vibration damper according to Claim 13, **characterized in that** the at least one stop receiver (35) is assigned a casing (90).

15. Torsional vibration damper according to Claim 1, **characterized in that** the stop (31) is supported with its radial inner side on a component (62) of the coupling arrangement (56).

16. Torsional vibration damper according to Claim 1, **characterized in that** the stop sides (42a to 42c) of the absorber mass elements (44a to 44c) are adapted in terms of their geometry to the design of the stop profile (40) of the stop (31).

17. Torsional vibration damper according to Claim 1, in which the absorber mass carrier (3) has, in relation to each absorber mass (7), two first guide tracks (13) which interact with two second guide tracks (22) of the respective absorber mass (7), wherein rolling bodies (20) for receiving the absorber masses (7) in a relatively movable manner on the absorber mass carrier (3) connect the first guide tracks (13) and the second guide tracks (22) to one another, **characterized in that** the second guide tracks (22), in the radially outer region, and/or the guide tracks (13), in the radially inner region, have a planar form (87; 107) or a widening (88; 108) such that the radial extent of the respective guide track (22; 13) assumes a maximum in the circumferential region of the respective starting region (24), that is to say in the region of the smallest radial spacing to the central axis (15).

18. Torsional vibration damper according to Claim 1, **characterized in that**, for a multiplicity of absorber masses (7), the stops (31) are combined on one common, preferably ring-shaped component (32).

19. Torsional vibration damper according to Claim 1, **characterized in that** the stops (31) for the absorber masses (7) are arranged radially within the absorber masses (7) .

20. Torsional vibration damper according to Claim 1, **characterized in that** the stops (31) for the absorber masses (7) are fastened or at least centred on the absorber mass carrier (3), on a component (74) of a damping device (70) of the coupling arrangement (56), or on a component (62) of the coupling arrangement (56) .

21. Torsional vibration damper according to Claim 1 having a coupling arrangement (56) provided for receiving the same, **characterized in that** the coupling arrangement (56) has a torsional vibration damper unit (75) in which the damping device (70), which has at least one circumferential spring set (68, 69), has a torsional damper input (67) and a torsional damper output (72), wherein the torsional damper input (67), the torsional damper output (72) or a torsional damper intermediate component (74) situated between torsional damper input (67) and torsional damper output (72) is provided for rotationally conjointly receiving at least one absorber mass carrier element (5) of the absorber mass carrier (3).

22. Torsional vibration damper according to Claim 21, **characterized in that** the torsional vibration damper unit (75) interacts with a clutch device (64).

## Revendications

1. Amortisseur d'oscillations de torsion (1) avec un support de masses d'amortisseur (3), sur lequel au moins une masse d'amortisseur (7) montée de façon mobile par rapport à celui-ci est montée, ainsi qu'avec au moins une butée (31), dans lequel au moins une butée (31) est associée respectivement à chaque côté de butée (42a à 42c) de ladite au moins une masse d'amortisseur (7), et dans lequel ladite au moins une masse d'amortisseur (7) ainsi que la butée (31) présentent une extension dans la direction d'extension d'un axe central (15), **caractérisé en ce que** ladite au moins une masse d'amortisseur (7) présente dans la direction d'extension de l'axe central (15) une multiplicité d'éléments de masse d'amortisseur (44a à 44c) et la butée (31) est dotée sur son côté tourné vers les côtés de butée (42a à 42c) des éléments de masse d'amortisseur (44a à 44c) dans la direction d'extension de l'axe central (15) d'un profil de butée (40), qui présente en association avec les éléments de masse d'amortisseur (44a à 44c) des distances radiales différentes (R1 à R3) par rapport à l'axe central (15).

2. Amortisseur d'oscillations de torsion selon la revendication 1, **caractérisé en ce que** le profil de butée (40) de la butée (31) présente en association avec un premier élément de masse d'amortisseur (44a) une distance radiale maximale (R1) par rapport à l'axe central (15), en association avec un deuxième élément de masse d'amortisseur (44c) une distance radiale minimale (R3), et en association avec au moins un autre élément de masse d'amortisseur (44b) une distance radiale (R2), dont la valeur se situe entre la distance radiale maximale (R1) et la distance radiale minimale (R3) .

3. Amortisseur d'oscillations de torsion selon la revendication 1, **caractérisé en ce que** le premier élément de masse d'amortisseur (44a) est prévu sur un premier côté axial (A1) de la masse d'amortisseur (7), le deuxième élément de masse d'amortisseur (44c) est prévu sur un deuxième côté axial (A2) de la masse d'amortisseur, et ledit au moins un autre élément de masse d'amortisseur (44b) est prévu axialement entre le premier élément de masse d'amortisseur (44a) et le deuxième élément de masse d'amortisseur (44c).

4. Amortisseur d'oscillations de torsion selon la revendication 2 ou 3, **caractérisé en ce que** la variation de la distance radiale (R1 à R3) entre le profil de butée (40) de la butée (31) et l'axe central (15) entre le premier côté axial (A1) de la masse d'amortisseur (7) et le deuxième côté axial (A2) de la masse d'amortisseur (7) suit une allure au moins essentiellement continue.

5. Amortisseur d'oscillations de torsion selon la revendication 4, **caractérisé en ce que** le profil de butée (40) de la butée (31) se rétrécit, à partir du premier côté axial (A1) de la masse d'amortisseur (7) en direction du deuxième côté axial (A2) de la masse d'amortisseur (7), sous un angle (α) au moins essentiellement en forme de coin.

6. Amortisseur d'oscillations de torsion selon la revendication 1, **caractérisé en ce que**, dans le cas d'une multiplicité de butées (31) pour les masses d'amortisseur (7), les butées (31) sont fixées chaque fois entre deux masses d'amortisseur (7) dans la direction périphérique.

7. Amortisseur d'oscillations de torsion selon la revendication 6, **caractérisé en ce que** les butées (31) pour les masses d'amortisseur (7) sont fixées au moyen d'au moins un récepteur de butée (35).

8. Amortisseur d'oscillations de torsion selon la revendication 7, **caractérisé en ce que** ladite au moins une butée (31) s'étend au moins à l'intérieur de la région entre le récepteur de butée associé (35) et les masses d'amortisseur (7) prévues de part et d'autre de ce récepteur de butée (35).

9. Amortisseur d'oscillations de torsion selon la revendication 8, **caractérisé en ce que** la butée (31) en association avec le récepteur de butée correspondant (35) est munie d'au moins un support (34), qui entoure le récepteur de butée (35).

10. Amortisseur d'oscillations de torsion selon la revendication 9, **caractérisé en ce que** ledit au moins un support (34) de la butée (31) est réalisé par rapport au récepteur de butée associé (35) de façon à former un espace libre (48) avec un décalage axial (50) .

11. Amortisseur d'oscillations de torsion selon la revendication 7, **caractérisé en ce que** ledit au moins un récepteur de butée (35) pour les butées (31) est formé par au moins une saillie de retenue (79; 82), qui est maintenue fermement après accrochage par un évidement associé (80) ou par engagement dans un évidement associé (83) d'un composant (62; 70) d'un dispositif de couplage (56) à travers ce composant (62; 70) .

12. Amortisseur d'oscillations de torsion selon la revendication 1, **caractérisé en ce que** ladite au moins une butée (31) pour la masse d'amortisseur (7) est déplaçable en direction périphérique par rapport à la masse d'amortisseur (7).

13. Amortisseur d'oscillations de torsion selon la revendication 12, **caractérisé en ce qu'**au moins un récepteur de butée (35) est associé à ladite au moins une butée (31) pour la masse d'amortisseur (7), et assure un centrage de la butée (31) par rapport à l'axe central (15).

14. Amortisseur d'oscillations de torsion selon la revendication 13, **caractérisé en ce qu'**un gainage (90) est associé audit au moins un récepteur de butée (35).

15. Amortisseur d'oscillations de torsion selon la revendication 1, **caractérisé en ce que** la butée (31) s'appuie avec son côté radial intérieur sur un composant (62) du dispositif de couplage (56).

16. Amortisseur d'oscillations de torsion selon la revendication 1, **caractérisé en ce que** les côtés de butée (42a à 42c) des éléments de masse d'amortisseur (44a à 44c) sont adaptés, en ce qui concerne leur géométrie, à la configuration du profil de butée (40) de la butée (31).

17. Amortisseur d'oscillations de torsion selon la revendication 1, **caractérisé en ce que** le support de masses d'amortisseur (3) est muni, par rapport à chaque masse d'amortisseur (7), de deux premières pistes de guidage (13), qui coopèrent avec deux pistes de guidage (22) de la masse d'amortisseur respective (7), dans lequel des corps de roulement (20) relient les unes aux autres les premières pistes de guidage (13) et les deuxièmes pistes de guidage (22) pour le montage relatif mobile des masses d'amortisseur (7) sur le support de masses d'amortisseur (3), **caractérisé en ce que** les deuxièmes pistes de guidage (22) sont dotées dans la région radialement extérieure et/ou les pistes de guidage (13) sont dotées dans la région radialement intérieure d'une déformation plane (87; 107) ou d'un élargissement (88; 108), de telle manière que l'extension radiale de la piste de guidage respective (22; 13) dans la région périphérique de la région de sortie respective (24), donc dans la région de la plus petite distance radiale par rapport à l'axe central (15), atteigne un maximum.

18. Amortisseur d'oscillations de torsion selon la revendication 1, **caractérisé en ce que** pour une multiplicité de masses d'amortisseur (7), les butées (31) sont rassemblées sur un composant commun (32), de préférence annulaire.

19. Amortisseur d'oscillations de torsion selon la revendication 1, **caractérisé en ce que** les butées (31) pour les masses d'amortisseur (7) sont disposées radialement à l'intérieur des masses d'amortisseur (7).

20. Amortisseur d'oscillations de torsion selon la revendication 1, **caractérisé en ce que** les butées (31) pour les masses d'amortisseur (7) sont fixées ou au moins centrées sur le support de masses d'amortisseur (3), sur un composant (74) d'un dispositif d'amortissement (70) du dispositif de couplage (56) ou sur un composant (62) du dispositif de couplage (56).

21. Amortisseur d'oscillations de torsion selon la revendication 1 avec un dispositif de couplage (56) prévu pour le recevoir, **caractérisé en ce que** le dispositif de couplage (56) est muni d'une unité d'amortisseur d'oscillations de torsion (75), dans laquelle ledit au moins un dispositif d'amortissement (70) présentant au moins un ensemble de ressorts périphériques (68, 69) présente une entrée d'amortisseur de torsion (67) et une sortie d'amortisseur de torsion (72), dans lequel l'entrée d'amortisseur de torsion (67), la sortie d'amortisseur de torsion (72) ou un composant intermédiaire d'amortisseur de torsion (74) se trouvant entre l'entrée d'amortisseur de torsion (67) et la sortie d'amortisseur de torsion (72) est prévu pour le montage solidaire en rotation d'au moins un élément de support de masse d'amortisseur (5) du support de masses d'amortisseur (3).

22. Amortisseur d'oscillations de torsion selon la revendication 21, **caractérisé en ce que** l'unité d'amortisseur d'oscillations de torsion (75) coopère avec un dispositif d'accouplement (64).
